# EUROPÄISCHE PATENTSCHRIFT

(11) **EP 3 008 325 B1**
(45) Veröffentlichungstag und Bekanntmachung des Hinweises auf die Patenterteilung: **19.04.2017**
(21) Anmeldenummer: 14733551.7
(22) Anmeldetag: 10.06.2014
(51) Int. Cl.: F02M 31/16, B60K 15/03, F02M 37/00, F02M 37/18, F02M 37/22

(54) **KRAFTSTOFFVERSORGUNGSSYSTEM**
FUEL SUPPLY SYSTEM
SYSTÈME D'ALIMENTATION EN CARBURANT

(30) Priorität: 12.06.2013 DE 102013210973
(43) Veröffentlichungstag der Anmeldung: 20.04.2016
(73) Patentinhaber: Mahle International GmbH, 70376 Stuttgart (DE)
(72) Erfinder: GÄNSWEIN, Matthias, 73732 Esslingen (DE); WETZEL, Jörn, 70372 Stuttgart (DE); JAUSS, Stefan, 73072 Donzdorf (DE)
(74) Vertreter: BRP Renaud & Partner mbB Rechtsanwälte Patentanwälte Steuerberater
(86) Internationale Anmeldenummer: PCT/EP2014/061967
(87) Internationale Veröffentlichungsnummer: WO 2014/198687

(56) Entgegenhaltungen:
- WO-A1-2010/149642
- DE-A1- 19 847 999
- DE-A1-102010 043 644
- US-B1- 7 883 627

## Beschreibung

Die vorliegende Erfindung betrifft ein Kraftstoffversorgungssystem einer Brennkraftmaschine gemäß dem Oberbegriff des Anspruchs 1. Die Erfindung betrifft außerdem ein Kraftfahrzeug mit einem derartigen Kraftstoffversorgungssystem sowie ein Verfahren zum Betrieb eines derartigen Kraftstoffversorgungssystems.

Aus der US 4,546,750 ist ein gattungsgemäßes Kraftstoffversorgungssystem bekannt, mit einem ersten Tank sowie einem als Pufferspeicher ausgebildeten zweiten Tank. Der zweite Tank ist dabei innerhalb des ersten Tanks angeordnet und umfasst eine darin angeordnete Kraftstoffpumpe, die Kraftstoff aus dem ersten Tank über einen Kraftstofffilter ansaugt.

Aus der DE 10 2010 043644 A1, aus der DE 199 36 287 C2, aus der DE 101 32 187 A1, aus der DE 195 09 143 A1 sowie aus der DE 10 2006 059 685 A1 sind weitere Kraftstoffversorgungssysteme bekannt.

Ein Nachteil bei bekannten Kraftstoffversorgungssystemen ist, dass diese oft unwirtschaftlich konstruiert sind und oftmals mangels entsprechender Regelstrategien auch nur unwirtschaftlich betrieben werden können.

Die vorliegende Erfindung beschäftigt sich mit dem Problem, für ein Kraftstoffversorgungssystem der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem an sich bekannten Kraftstoffversorgungssystem eine Y-förmige Rücklaufleitung vorzusehen, die eingangsseitig mit einer Brennkraftmaschine verbunden ist und ausgangsseitig in einen zweiten, als Pufferspeicher ausgebildeten, Tank und stromauf eines ersten Kraftstofffilters in eine Kraftstoffleitung mündet. In dieser ersten Rücklaufleitung ist dabei ein Vorwärmventil angeordnet, das den von der Brennkraftmaschine rückströmenden Kraftstoff auf das erste Kraftstofffilter und/oder auf den zweiten Tank aufteilt und dadurch bedarfsgerecht unterschiedlichste Betriebszustände der Brennkraftmaschine abdecken kann. Das erfindungsgemäße Kraftstoffversorgungssystem weist dabei einen als Haupttank ausgebildeten ersten Tank sowie den zuvor erwähnten und als Pufferspeicher ausgebildeten zweiten Tank auf, die beide über die ebenfalls bereits erwähnte Kraftstoffleitung miteinander verbunden sind. Zwischen dem ersten und dem zweiten Tank sind dabei eine erste Kraftstoffpumpe, beispielsweise eine elektrische Pumpe, sowie das als Vorfilter dienende erste Kraftstofffilter angeordnet. Zwischen dem zweiten Tank und der Brennkraftmaschine hingegen sind eine zweite Kraftstoffpumpe sowie ein zweites Kraftstofffilter, welches beispielsweise als Hauptfilter ausgebildet ist, angeordnet. Im ersten Kraftstofffilter, das heißt beispielsweise im Vorfilter, ist dabei ein Wasserabscheider zur Trocknung des Kraftstoffs vorgesehen. Über die zu Anfang beschriebene ersten Rücklaufleitung ist es nun möglich, den in der Brennkraftmaschine nicht benötigten und daher nicht verbrannten Kraftstoff wahlweise in den Zwischentank, das heißt den zweiten Tank, oder aber rohseitig in das erste Kraftstofffilter einzuspeisen, wodurch beispielsweise die jeweilige Fördermenge der ersten Kraftstoffpumpe und damit auch die dafür benötigte Leistung optimal an individuelle Betriebszustände der Brennkraftmaschine angepasst werden kann.

Bei einer vorteilhaften Weiterbildung der erfindungsgemäßen Lösung ist eine Sensoreinrichtung vorgesehen, die ein temperaturbedingtes Verdicken des Kraftstoffs oder ein Verstopfen des ersten und/oder zweiten Kraftstofffilters erfasst. Eine derartige Sensoreinrichtung kann beispielsweise einen Drucksensor und/oder einen Temperatursensor umfassen. Zudem ist eine Steuerungs-/Regelungseinrichtung vorgesehen, die zum einen mit dem Vorwärmventil in der ersten Rücklaufleitung und zum anderen mit der Sensoreinrichtung kommunizierend verbunden ist und dadurch das Vorwärmventil in Abhängigkeit der von der Sensoreinrichtung übermittelten Parameter steuern bzw. regeln kann. Bei einer alternativen Ausführungsform kann auf ein eigenes Steuergerät im Kraftstoffversorgungssystem verzichtet werden und die Steuerungs- und Regelungssignale können direkt vom Motorsteuergerät versandt werden. Erfasst beispielsweise ein Temperatursensor der Sensoreinrichtung eine Temperatur, bei welcher ein Versulzen des Kraftstoffs, das heißt ein Verdicken desselben, auftritt, so kann dem entgegengewirkt werden, indem der durch das erste und zweite Kraftstofffilter strömende Kraftstoff zuvor erwärmt wird. Detektiert somit der Temperatursensor eine kritische Temperatur, so schaltet die Steuerungs-/Regelungseinrichtung das Vorwärmventil derart, dass der von der Brennkraftmaschine zurückströmende Kraftstoff zumindest überwiegend stromauf des ersten Kraftstofffilters in die Kraftstoffleitung eingeleitet und mit dem vergleichsweise kälteren aus dem ersten Tank stammenden Kraftstoff vermischt wird. Das Vorwärmventil muss dabei nicht zwingend ein elektrisch schaltendes Ventil sein, sondern kann auch als mechanisches Ventil, z.B. als thermisches Bimetallventil oder als Thermostatventil gestaltet sein. Durch das Vermischen des rückströmenden Kraftstoffs und des aus dem ersten Tank stammenden Kraftstoffs wird die Temperatur des Kraftstoffes insgesamt angehoben und damit die Versulzungsgefahr unterbunden bzw. zumindest reduziert. In gleicher Weise kann auch reagiert werden, wenn ein Drucksensor der Sensoreinrichtung ein Ansteigen des Drucks detektiert. Ein Druckanstieg kann ebenfalls mit einer mangelnden Fließfähigkeit des Kraftstoffes in Zusammenhang stehen, was wiederum durch ein Erwärmen des Kraftstoffs zumindest abgemildert werden kann.
Die Erfindung beruht weiter auf dem allgemeinen Gedanken, ein Verfahren zum Betrieb eines zuvor beschriebenen Kraftstoffversorgungssystems anzugeben, durch welches unterschiedlichste Betriebszustände der Brennkraftmaschine optimal berücksichtigt werden können. Das erfindungsgemäße Verfahren unterscheidet dabei vier unterschiedliche Betriebsmodi, nämlich einen Betriebsmodus I, der den Normalbetrieb abbildet, einen Betriebsmodus II, sofern eine Verdickungsgefahr des Kraftstoffs oder ein Zusetzen des Kraftstofffilters besteht, einen Betriebsmodus III, sofern eine Überhitzungsgefahr der Brennkraftmaschine besteht sowie einen Betriebsmodus IV, bei dem eine aktive Trocknung des Kraftstoffs im ersten Tank, das heißt im Haupttank, erfolgen kann.

Im Normalbetrieb, das heißt im Betriebsmodus I, fördert die erste Kraftstoffpumpe, das heißt die elektrische Pumpe, nur so viel Kraftstoff, wie von der Brennkraftmaschine auch benötigt, das heißt verbrannt wird. In diesem Betriebszustand fließt somit kein Kraftstoff durch die zweite Rücklaufleitung vom zweiten Tank in den ersten Tank zurück, da der gesamte von der ersten Kraftstoffpumpe geförderte Kraftstoff in der Brennkraftmaschine verbrannt wird. Hierdurch kann die erforderliche Pumpenleistung und auch die erforderliche Energie zum Betrieb der ersten Kraftstoffpumpe minimiert und damit das gesamte Kraftstoffversorgungssystem optimiert werden.

Im Betriebsmodus II erfasst die Sensoreinrichtung, das heißt beispielsweise deren Temperatur- und/oder Drucksensor ein entsprechendes Signal, welches auf eine Versulzungsgefahr des Kraftstoffs, das heißt ein Verdicken des Kraftstoffs, oder aber ein Zusetzen des ersten und/oder zweiten Kraftstofffilters hinweist. Liefert die Sensoreinrichtung ein derartiges Signal, so schaltet die Steuerungs-/Regelungseinrichtung das in der ersten Rücklaufleitung angeordnete Vorwärmventil derart, dass der von der Brennkraftmaschine zurückströmende Kraftstoff zumindest überwiegend stromauf des ersten Kraftstofffilters in die Kraftstoffleitung oder direkt rohseitig in das erste Kraftstofffilter eingeleitet und dadurch der durch die beiden Kraftstofffilter fließende Kraftstoff erwärmt wird. Durch die Erwärmung des durch die beiden Kraftstofffilter fließenden Kraftstoffs wird die Versulzungsneigung des Kraftstoffs reduziert und dadurch auch die Verstopfungsgefahr der Kraftstofffilter minimiert bzw. vorzugsweise sogar gebannt. Bei einem Kaltstart der Brennkraftmaschine ist dies selbstverständlich wenig hilfreich, da der von der Brennkraftmaschine rückströmende Kraftstoff noch nicht warm genug ist. Für diesen Fall kann stromauf des ersten Kraftstofffilters eine entsprechende Heizeinrichtung, beispielsweise in der Art von PTC-Heizelementen, vorgesehen sein, die eine Beheizung des Kraftstoffs und damit eine Verdünnung desselben bewirkt. Aufgrund der modernen Kraftstoffe mit geringer Versulzungsgefahr bzw. sehr geringen Versulzungstemperaturen kann jedoch sogar rein theoretisch auf eine derartige Heizeinrichtung verzichtet werden, wodurch das erfindungsgemäße Kraftstoffversorgungssystem konstruktiv deutlich einfacher und damit kostengünstiger aufgebaut werden kann.

Der Betriebsmodus III tritt auf, sofern eine Überhitzungsgefahr der Brennkraftmaschine besteht und diese vor einer entsprechenden Überhitzung durch eine Beschränkung der maximalen Kraftstoffzulauftemperatur geschützt werden muss. Klassischerweise kann hierfür ein Kühler verwendet werden. Bei der Verwendung eines klassischen Kühlers entsteht ein Druckverlust in der Leitung, welcher zu einem erhöhten Energieverbrauch führt. Bei dem erfindungsgemäßen Versorgungssystem ist es jedoch möglich, einen derartigen separaten Kühler, der nicht nur teuer ist, sondern zudem auch aufwändig eingebaut werden muss, einzusparen, da im Betriebsmodus III die Steuerungs-/Regelungseinrichtung bei einem entsprechenden Signal der Sensoreinrichtung das Vorwärmventil so schaltet, dass der von der Brennkraftmaschine zurückströmende Kraftstoff zumindest überwiegend in den zweiten Tank eingeleitet wird. Gleichzeitig wird die erste Kraftstoffpumpe, die den Kraftstoff aus dem ersten Tank in den zweiten Tank fördert, hinsichtlich ihrer Förderleistung gesteigert, so dass diese eine Fördermenge bereitstellt, die oberhalb derjenigen liegt, die in der Brennkraftmaschine verbrannt wird. Die erste Kraftstoffpumpe fördert somit im Betriebsmodus III mehr Kraftstoff aus dem ersten Tank in den zweiten Tank, als die Brennkraftmaschine verbraucht, so dass über die zweite Rücklaufleitung der wärmere Kraftstoff vom zweiten Tank in den ersten Tank zurückströmt und dort mit dem kälteren Kraftstoff vermischt wird. Hierdurch erfolgt eine Kühlung des vom zweiten Tank in den ersten Tank zurückströmenden Kraftstoffs, welcher nunmehr in der gekühlten Form von der ersten Kraftstoffpumpe wieder dem zweiten Tank zugeführt wird. Mittels des Betriebsmodus III ist es somit möglich, ohne zusätzlichen und teuren Kühler die Kraftstoffzulauftemperatur für die Brennkraftmaschine zu begrenzen und dadurch deren Überhitzungsgefahr zu reduzieren.

Der Betriebsmodus IV wird aktiviert, sofern eine Füllstandserfassungseinrichtung im ersten Tank ein Auffüllen des ersten Tanks mit neuem Kraftstoff erfasst. Die Füllstandserfassungseinrichtung ist dabei kommunizierend mit der Steuerungs-/Regelungseinrichtung verbunden. Generell wird im Betriebsmodus IV der Kraftstoff getrocknet, das heißt der in diesem vorhandene Wasseranteil gesenkt. Frisch eingefüllter, das heißt frisch getankter, Kraftstoff beinhaltet üblicherweise einen Wasseranteil, der über einen entsprechenden Wasserabscheider im ersten Kraftstofffilter abgeschieden werden soll. Im Betriebsmodus IV fördert somit die erste Kraftstoffpumpe Kraftstoff aus dem ersten Tank durch das erste Kraftstofffilter und den darin angeordneten Wasserabscheider, beispielsweise einen Koaleszer, in den zweiten Tank, so dass abhängig vom Betriebszustand der Brennkraftmaschine der im ersten Kraftstofffilter getrocknete, das heißt entwässerte, Kraftstoff ausschließlich der Brennkraftmaschine zugeführt oder zumindest teilweise über die zweite Rücklaufleitung vom zweiten Tank in den ersten Tank zurückströmt und dort mit dem Kraftstoff vermischt wird.

In Abhängigkeit des Betriebszustandes der Brennkraftmaschine bedeutet in diesem Fall prinzipiell die Unterscheidung von zumindest zwei Betriebszuständen, nämlich einerseits der Volllast der Brennkraftmaschine sowie andererseits der Teillast der Brennkraftmaschine.

Läuft die Brennkraftmaschine unter Volllast, so ist keine Trocknung des Kraftstoffes im ersten Tank möglich, da der gesamte von der ersten und zweiten Kraftstoffpumpe geförderte Kraftstoff komplett in der Brennkraftmaschine benötigt und dort verbrannt wird. Ein Zurückströmen von Kraftstoff in den ersten Tank erfolgt dabei weder aus der Brennkraftmaschine über die erste Rücklaufleitung noch aus dem zweiten Tank über die zweite Rücklaufleitung. Sofern das Kraftstoffversorgungssystem so ausgelegt wird, dass auch unter Volllast noch Leistungsreserven vorhanden sind, ist auch eine gezielte Kraftstofftrocknung des Haupttanks unter Volllast möglich. Der zweite Betriebszustand der Brennkraftmaschine betrifft dabei eine Teillast, bei welcher eine aktive Trocknung des Kraftstoffs im ersten Tank möglich ist, indem die erste Kraftstoffpumpe mehr Kraftstoff fördert als von der Brennkraftmaschine verbrannt wird. Der somit zu viel in den zweiten Tank geförderte Kraftstoff wird im ersten Kraftstofffilter entwässert, das heißt getrocknet und nun über die zweite Rücklaufleitung wieder dem ersten Tank zugeführt. Der getrocknete Kraftstoff vermischt sich somit im ersten Tank mit dem ursprünglichen Kraftstoff und senkt dadurch dessen Wasseranteil bzw. dessen Feuchtegehalt. Die Kraftstofftrocknung im Betriebsmodus IV wird dabei solange durchgeführt, bis zumindest einmal der gesamte Tankinhalt entwässert wurde. Die Rücklaufmenge vom zweiten Tank (Hoppertank) bestimmt dabei die Dauer der Kraftstofftrocknung. Je nach gewünschter Restfeuchte im Kraftstoff können mehrere Trocknungsumläufe des Kraftstoffs erforderlich sein. Alternativ kann mittels eines im ersten Tank angeordneten Feuchtesensors ein vordefinierter Feuchtegehalt ermittelt werden, welchen die Kraftstofftrocknung deaktiviert. Rein theoretisch kann dieser Feuchtesensor in umgekehrter Weise auch dazu verwendet werden, den Betriebsmodus IV zu aktivieren, sofern der Feuchtesensor ein Überschreiten des vordefinierten Feuchtegehalts, beispielsweise ein Erreichen bzw. Überschreiten eines vordefinierten Feuchtegrenzwertes, detektiert. Wie bereits eingangs erwähnt kann die Kraftstofftrocknung im Betriebsmodus IV auch aktiviert werden, sofern die Füllstandserfassungseinrichtung ein Auffüllen des ersten Tanks mit neuem Kraftstoff erfasst, da dieser üblicherweise einen höheren Wasseranteil aufweist. Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1: ein erfindungsgemäßes Kraftstoffversorgungssystem,
- Fig. 2: eine Detaildarstellung des erfindungsgemäßen Kraftstoffversorgungssystems im Bereich des ersten Kraftstofffilters.

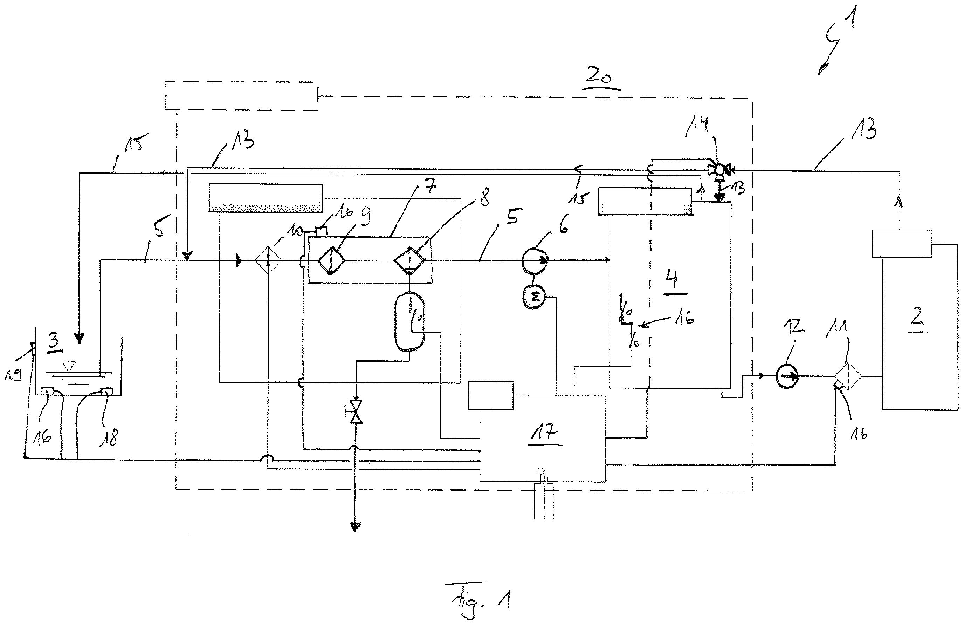

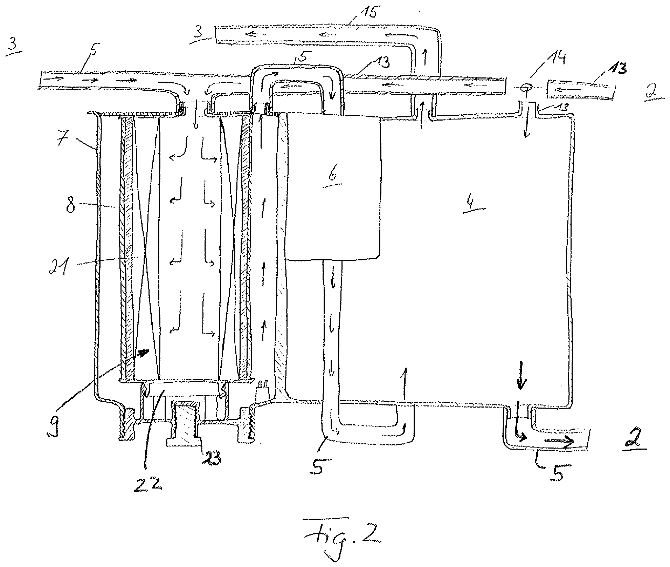

Entsprechend der Figur 1, weist ein erfindungsgemäßes Kraftstoffversorgungssystem 1 einer Brennkraftmaschine 2 einen als Haupttank ausgebildeten ersten Tank 3 sowie einen als Pufferspeicher bzw. Zwischenspeicher ausgebildeten zweiten Tank 4 auf, die über eine Kraftstoffleitung 5 miteinander verbunden sind. Zwischen dem ersten Tank 3 und dem zweiten Tank 4 ist dabei eine erste Kraftstoffpumpe 6, beispielsweise eine elektrische Kraftstoffpumpe, sowie ein als Vorfilter dienendes erstes Kraftstofffilter 7 angeordnet, wobei in dem ersten Kraftstofffilter 7 zugleich ein Wasserabscheider 8 angeordnet ist. Das erste Kraftstofffilter 7 kann darüber hinaus ein Schmutzfilter 9 mit einem Ringfilterelement 21 (vgl. Fig. 2) umfassen. Ebenfalls vorgesehen sein kann eine dem ersten Kraftstofffilter 7 vorgeschaltete Heizeinrichtung 10, die insbesondere bei einem Kaltstart der Brennkraftmaschine 2 und bei kalten Umgebungsbedingungen ein Versulzen des Kraftstoffs und dadurch ein Zusetzen des ersten Kraftstofffilters 7 bzw. eines zweiten Kraftstofffilters 11, das beispielsweise als Hauptfilter ausgebildet ist, verhindert. Das zweite Kraftstofffilter 11 ist dabei zwischen dem zweiten Tank 4 und der Brennkraftmaschine 2 angeordnet, wobei in diesem Bereich zusätzlich noch eine zweite Kraftstoffpumpe 12, die dem zweiten Kraftstofffilter 11 vorgeschaltet und beispielsweise als Hochdruckpumpe ausgebildet sein kann, angeordnet ist. Der Wasserabscheider 8 im Bereich des ersten Kraftstofffilters 7 dient dabei insbesondere der Trocknung des der Brennkraftmaschine 2 zugeführten Kraftstoffs, das heißt der Reduzierung eines im Kraftstoff enthaltenden Wasseranteils.

Darüber hinaus ist bei dem erfindungsgemäßen Kraftstoffversorgungssystem 1 eine erste Rücklaufleitung 13 vorgesehen, die eingangsseitig mit der Brennkraftmaschine 2 verbunden ist und ausgangsseitig in den zweiten Tank 4 und rohseitig in das erste Kraftstofffilter 7 bzw. stromauf desselben in die Kraftstoffleitung 5 mündet. Im Bereich der ersten Rücklaufleitung 13 ist dabei ein Vorwärmventil 14 angeordnet, das den von der Brennkraftmaschine 2 rückströmenden Kraftstoff auf das erste Kraftstofffilter 7 und/oder den zweiten Tank 4 aufteilt. Der zweite Tank 4 wiederum ist über eine separate zweite Rücklaufleitung 15 mit dem ersten Tank 3 verbunden. Darüber hinaus ist eine Sensoreinrichtung 16 vorgesehen, die ein temperaturbedingtes Verdicken des Kraftstoffs oder ein Verstopfen des ersten oder zweiten Kraftstofffilters 7, 11 erfasst. Die Sensoreinrichtung 16, welche gemäß der Figur 1 an unterschiedlichsten Stellen unterschiedlichste Sensoren, beispielsweise Drucksensoren und/oder Temperatursensoren umfassen kann, ist zudem mit einer Steuerungs-/Regelungseinrichtung 17 kommunizierend verbunden, die wiederum mit dem Vorwärmventil 14 kommunizierend verbunden und zudem in der Lage ist, dieses in Abhängigkeit der von der Sensoreinrichtung 16 übermittelten Parameter, beispielsweise Temperaturen und/oder Drücke, zu steuern.

Darüber hinaus kann im ersten Tank 3 ein Feuchtesensor 18 zur Ermittlung des im Kraftstoff vorhandenen Wasseranteils angeordnet sein. Darüber hinaus kann im ersten Tank 3 auch eine Füllstandserfassungseinrichtung 19 angeordnet sein, die ebenfalls kommunizierend mit der Steuerungs-/Regelungseinrichtung 17 verbunden ist. Das erfindungsgemäße Kraftstoff-Versorgungssystem 1 kann dabei in einem Kraftfahrzeug 20 angeordnet sein.

Mit dem erfindungsgemäßen Kraftstoff-Versorgungssystem 1 und insbesondere der Steuerungs-/Regelungseinrichtung 17 lässt sich das gesamte Kraftstoffmanagement deutlich effizienter gestalten, wobei zudem das erfindungsgemäße Kraftstoff-Versorgungssystem 1 konstruktiv einfacher als bisher aufgebaut sein kann.

Dem allgemeinen Gedanken der Erfindung entsprechend wird auch ein erfindungsgemäßes Verfahren zum Betrieb dieses KraftstoffVersorgungssystems 1 vorgeschlagen, bei dem generell vier unterschiedliche Betriebsmodi I bis IV unterschieden werden, nämlich ein Betriebsmodus I, der den Normalbetrieb darstellt, den Betriebsmodus II, sofern eine Verdickungsgefahr des Kraftstoffs oder ein Zusetzen des Kraftstofffilters 7, 11 besteht, ein Betriebsmodus III, sofern eine Überhitzungsgefahr der Brennkraftmaschine 2 besteht sowie ein Betriebsmodus IV, bei dem eine aktive Trocknung des Kraftstoffs im ersten Tank 3 erfolgt.
Im Betriebsmodus I, das heißt im normalen Betrieb der Brennkraftmaschine 2, soll über die erste Kraftstoffpumpe 6 nur diejenige Kraftstoffmenge gefördert werden, die zugleich in der Brennkraftmaschine 2 auch benötigt, das heißt verbrannt wird. Hierdurch wird kein Kraftstoff von der Brennkraftmaschine 2 oder aus dem zweiten Tank 4 zurück zum ersten Tank 3 geleitet. Im Betriebsmodus I kann somit die von der ersten Kraftstoffpumpe 6 aufgenommene elektrische Leistung optimiert und dadurch ein wirtschaftlicher Betrieb erreicht werden.

Im Betriebsmodus II schaltet die Steuerungs-/Regelungseinrichtung 17 bei einem entsprechenden Signal der Sensoreinrichtung 16 das Vorwärmventil 14 derart, dass der von der Brennkraftmaschine 2 zurückströmende Kraftstoff zumindest überwiegend stromauf des ersten Kraftstofffilters 7 in die Kraftstoffleitung 5 eingeleitet und dadurch der Kraftstoff erwärmt wird. Der Betriebsmodus II wird dabei eingesetzt, sofern eine Versulzungsgefahr bzw. eine Verdickungsgefahr des Kraftstoffs besteht. Der von der Brennkraftmaschine 2 zurückströmende vergleichsweise warme Kraftstoff wird dabei mittels des Vorwärmventils 14 nicht in den zweiten Tank 4 geleitet, sondern über das Vorwärmventil 14 stromauf des Kraftstofffilters 7 in die Kraftstoffleitung 5. Insbesondere bei einem Kaltstart der Brennkraftmaschine 2 kann zudem die Heizeinrichtung 10 aktiviert werden, welche den Kraftstoff zusätzlich erwärmt.

Der Betriebsmodus III tritt auf, sofern eine Überhitzungsgefahr der Brennkraftmaschine 2 besteht. Um die Brennkraftmaschine 2 vor Überhitzung zu schützen, muss die maximale Kraftstoffzulauftemperatur reduziert werden. Klassischerweise wird hierfür ein Kühler verwendet, der jedoch bei dem erfindungsgemäßen Kraftstoff-Versorgungssystem 1 generell entfallen kann. Hierzu schaltet die Steuerungs-/Regelungseinrichtung 17 bei einem entsprechenden Signal der Sensoreinrichtung 16 das Vorwärmventil 14 derart, dass der von der Brennkraftmaschine 2 zurückströmende Kraftstoff zumindest überwiegend in den zweiten Tank 4 eingeleitet wird, wobei die erste Kraftstoffpumpe 6 hierbei mehr Kraftstoff aus dem ersten Tank 3 in den zweiten Tank 4 fördert, als von der Brennkraftmaschine 2 verbrannt wird, so dass über die zweite Rücklaufleitung 15 vergleichsweise warmer Kraftstoff vom zweiten Tank 4 in den ersten Tank 3 zurückströmt und dort mit dem dort vorhandenen kälteren Kraftstoff vermischt wird. Bei einem erneuten Ansaugen von Kraftstoff aus dem ersten Tank 3 und Zuführen desselben in den zweiten Tank 4 wird der dort vorhandene Kraftstoff gekühlt und dadurch in gekühlter Weise auch der Brennkraftmaschine 2 zugeführt.

Schließlich gibt es noch den Betriebsmodus IV, bei welchem der Kraftstoff im ersten Tank 3 getrocknet wird. Die Kraftstofftrocknung im Betriebsmodus IV wird dabei beispielsweise aktiviert, sofern die Füllstandserfassungseinrichtung 19 ein Auffüllen des ersten Tanks 3 mit neuem Kraftstoff und damit mit Kraftstoff mit vergleichsweise hohem Wasseranteil detektiert. In ähnlicher Weise kann der Betriebsmodus IV auch aktivierte werden, wenn der Feuchtesensor 19 einen erhöhten Wasseranteil im Kraftstoff im ersten Tank 3 detektiert. Ein ähnlicher Feuchtesensor 19 kann selbstverständlich auch im Bereich des zweiten Tanks 4 angeordnet sein und die Aktivierung des Betriebsmodus IV auslösen. Im Betriebsmodus IV pumpt dabei die erste Kraftstoffpumpe 6 Kraftstoff aus dem ersten Tank 3 durch das erste Kraftstofffilter 7 in den zweiten Tank 4, wobei abhängig vom Betriebszustand der Brennkraftmaschine 2 der im ersten Kraftstofffilter 7 getrocknete Kraftstoff ausschließlich der Brennkraftmaschine 2 zugeführt oder zumindest teilweise über die zweite Rücklaufleitung 15 vom zweiten Tank 4 in den ersten Tank 3 zurückströmt und mit dem dort vorhandenen Kraftstoff vermischt wird.

Generell werden hierbei zwei unterschiedliche Betriebszustände der Brennkraftmaschine 2 bzw. des Kraftfahrzeugs 20 unterschieden:
Der erste Betriebszustand betrifft dabei den Volllastzustand, bei welchem keine Trocknung des Kraftstoffs möglich ist, da der durch das erste Kraftstofffilter 7 und den Wasserabscheider 8, der für die Trocknung erforderlich ist, strömende Kraftstoff vollständig in der Brennkraftmaschine 2 verbrannt wird.

Im zweiten Betriebszustand fährt die Brennkraftmaschine 2 lediglich unter Teillast, so dass eine aktive Trocknung des Kraftstoffs möglich ist. Hierfür fördert die erste Kraftstoffpumpe 6 ca. 50% mehr Kraftstoff in den zweiten Tank 4 als in der Brennkraftmaschine 2 verbrannt wird, so dass aus dem zweiten Tank 4 Kraftstoff über die zweite Rücklaufleitung 15 in den ersten Tank 3 zurückgeführt wird. Durch die im ersten Kraftstofffilter 7 und insbesondere in dem dort angeordneten Wasserabscheider 8 erfolgte Trocknung des Kraftstoffs wird der im ersten Tank 3 vorhandene Kraftstoff stets mit trocknerem Kraftstoff vermischt, und zwar solange, bis der Feuchtesensor 19 im ersten Tank 3 einen vordefinierten Feuchtegehalt ermittelt. Durch das mehrmalige Durchströmen des ersten Kraftstofffilters 7 mit dem Wasserabscheider 8 kann dabei der Wasseranteil im Kraftstoff reduziert werden, wobei ein Kreislauf zwischen ersten Tank 3, Kraftstofffilter 7, zweiten Tank 4 und zweiter Rücklaufleitung 15 besteht.

Generell können darüber hinaus weitere, insbesondere topographieabhängige oder GPS-abhängige Szenarien bzw. Regelstrategien ausgeführt werden. So kann zum Beispiel für die Fahrt auf einer ebenen Straße ein anderes Programm wie für einen Anstieg, Abstieg oder eine kurvige Straße bzw. einen Stop-and-Go-Verkehr verarbeitet werden. Ebenso können Szenarien für beispielsweise Nutzkraftfahrzeuge bezüglich Volllast bzw. Leerfahrt angedacht werden.

Betrachtet man nun die Figur 2, so kann man darin das erste Kraftstofffilter 7 mit dem Wasserabscheider 8, beispielsweise einem Koaleszer, erkennen. Unterhalb eines entsprechenden Ringfilterelements 21 ist dabei ein Wassersammelraum 22 angeordnet, über welchen beispielsweise über eine entsprechende Wasserablassschraube 23 das im Wasserabscheider 8 abgeschiedene Wasser abgelassen werden kann. Ebenso dargestellt ist das Vorwärmventil 14, welches von der nicht dargestellten Brennkraftmaschine 2 über die erste Rücklaufleitung 13 rückgeführten Kraftstoff zwischen dem ersten Kraftstofffilter 6 und dem zweiten Tank 4 aufteilt.

Der zweite Tank 4 kann ein Fassungsvermögen von ca. 500ml aufweisen und ist bodenseitig über die Kraftstoffleitung 5 mit der Brennkraftmaschine 2 verbunden. Über die zweite Rücklaufleitung 15 ist der zweite Tank 4 mit dem ersten Tank 3 verbunden. Die erste Kraftstoffpumpe 6 ist in diesem Fall in den zweiten Tank 4 integriert. Ebenso ist denkbar, dass das erste Kraftstofffilter 7 und der zweite Tank 4 eine gemeinsame Baugruppe darstellen.

## Patentansprüche

1. Kraftstoffversorgungssystem (1) einer Brennkraftmaschine (2), mit einem als Haupttank ausgebildeten ersten Tank (3) und einem als Pufferspeicher ausgebildeten zweiten Tank (4), die über eine Kraftstoffleitung (5) miteinander verbunden sind, wobei
- zwischen dem ersten und dem zweiten Tank (3,4) eine erste Kraftstoffpumpe (6) und ein als Vorfilter dienendes erstes Kraftstofffilter (7) angeordnet sind, wogegen zwischen dem zweiten Tank (4) und der Brennkraftmaschine (2) eine zweite Kraftstoffpumpe (12) und ein zweites Kraftstofffilter (11) angeordnet sind,
- zumindest das erste Kraftstofffilter (7) einen Wasserabscheider (8) zur Trocknung des Kraftstoffs aufweist,
**dadurch gekennzeichnet,**
- **dass** eine erste Rücklaufleitung (13) vorgesehen ist, die eingangsseitig mit der Brennkraftmaschine (2) verbunden ist und ausgangsseitig in den zweiten Tank (4) und rohseitig in das erste Kraftstofffilter (7) mündet,
- **dass** in der ersten Rücklaufleitung (13) ein Vorwärmventil (14) angeordnet ist, das den von der Brennkraftmaschine (2) rückströmenden Kraftstoff auf das erste Kraftstofffilter (7) und/oder den zweiten Tank (4) aufteilt,
- **dass** der zweite Tank (4) über eine zweite Rücklaufleitung (15) mit dem ersten Tank (3) verbunden ist.

2. Kraftstoffversorgungssystem nach Anspruch 1,
**dadurch gekennzeichnet,**
**dass** eine Sensoreinrichtung (16) vorgesehen ist, die ein temperaturbedingtes Verdicken des Kraftstoffs oder ein Verstopfen des ersten oder zweiten Kraftstofffilters (7,11) erfasst.

3. Kraftstoffversorgungssystem nach Anspruch 2,
**dadurch gekennzeichnet,**
**dass** die Sensoreinrichtung (16) einen Drucksensor und/oder einen Temperatursensor aufweist.

4. Kraftstoffversorgungssystem nach Anspruch 2 oder 3,
**dadurch gekennzeichnet,**
**dass** eine Steuerungs-/Regelungseinrichtung (17) vorgesehen ist, die mit dem Vorwärmventil (14) und der Sensoreinrichtung (16) kommunizierend verbunden ist und das Vorwärmventil (14) in Abhängigkeit der von der Sensoreinrichtung (16) übermittelten Parameter steuert.

5. Kraftstoffversorgungssystem nach Anspruch 4,
**dadurch gekennzeichnet,**
**dass** im ersten Tank (3) eine Füllstandserfassungseinrichtung (19) vorgesehen ist, die kommunizierend mit der Steuerungs-/Regelungseinrichtung (17) verbunden ist.

6. Kraftstoffversorgungssystem nach einem der Ansprüche 1 bis 5,
**dadurch gekennzeichnet,**
**dass** im ersten Tank (3) ein Feuchtesensor (18) zur Ermittlung des im Kraftstoff vorhandenen Wasseranteils vorgesehen ist.

7. Kraftfahrzeug mit einem Kraftstoffversorgungssystem (1) nach einem der Ansprüche 1 bis 6.

8. Verfahren zum Betrieb eines Kraftstoffversorgungssystem (1) nach einem der Ansprüche 1 bis 6, bei dem vier unterschiedliche Betriebsmodi unterschieden werden, nämlich ein Betriebsmodus I, der den Normalbetrieb darstellt, ein Betriebsmodus II sofern eine Verdickungsgefahr des Kraftstoffes oder ein Zusetzen des Kraftstofffilters (7,11) besteht, ein Betriebsmodus III, sofern eine Überhitzungsgefahr der Brennkraftmaschine (2) besteht und ein Betriebsmodus IV, bei dem eine aktive Trocknung des Kraftstoffes im ersten Tank (3) erfolgt.

9. Verfahren nach Anspruch 8,
**dadurch gekennzeichnet,**
**dass** im Betriebsmodus I die erste Kraftstoffpumpe (6) im Wesentlichen nur so viel Kraftstoff fördert, wie von der Brennkraftmaschine (2) verbrannt wird.

10. Verfahren nach Anspruch 8 oder 9,
**dadurch gekennzeichnet,**
**dass** im Betriebsmodus II die Steuerungs-/Regelungseinrichtung (17) bei einem entsprechenden Signal der Sensoreinrichtung (16) das Vorwärmventil (14) so schaltet, dass der von der Brennkraftmaschine (2) zurückströmende Kraftstoff zumindest überwiegend stromauf des ersten Kraftstofffilters (7) in die Kraftstoffleitung (5) eingeleitet und dadurch den Kraftstoff erwärmt wird.

11. Verfahren nach einem der Ansprüche 8 bis 10,
**dadurch gekennzeichnet,**
**dass** im Betriebsmodus III die Steuerungs-/Regelungseinrichtung (17) bei einem entsprechenden Signal der Sensoreinrichtung (16) das Vorwärmventil (14) so schaltet, dass der von der Brennkraftmaschine (2) zurückströmende Kraftstoff zumindest überwiegend in den zweiten Tank (4) eingeleitet wird, wobei die erste Kraftstoffpumpe (6) mehr Kraftstoff aus dem ersten Tank (3) in den zweiten Tank (4) fördert, als von der Brennkraftmaschine (2) verbrannt wird, so dass über die zweite Rücklaufleitung (15) der wärmere Kraftstoff vom zweiten Tank (4) in den ersten Tank (3) zurückströmt und dort mit dem kälteren Kraftstoff vermischt wird.

12. Verfahren nach einem der Ansprüche 8 bis 11,
**dadurch gekennzeichnet,**
**dass** im Betriebsmodus IV die erste Kraftstoffpumpe (6) Kraftstoff aus dem ersten Tank (3) durch das erste Kraftstofffilter (7) in den zweiten Tank (4) fördert, so dass abhängig vom Betriebszustand der Brennkraftmaschine (2) der im ersten Kraftstofffilter (7) getrocknete Kraftstoff ausschließlich der Brennkraftmaschine (2) zugeführt oder zumindest teilweise über die zweite Rücklaufleitung (15) vom zweiten Tank (4) in den ersten Tank (3) zurückströmt und dort mit dem Kraftstoff vermischt wird.

13. Verfahren nach Anspruch 12,
**dadurch gekennzeichnet,**
- **dass** die Kraftstofftrocknung im Betriebsmodus IV solange durchgeführt wird, bis der Feuchtesensor (18) eine vordefinierten Feuchtegehalt ermittelt,
- **dass** die Kraftstofftrocknung im Betriebsmodus IV aktiviert wird, sofern der Füllstandserfassungseinrichtung (19) ein Auffüllen des ersten Tanks (3) mit Kraftstoff detektiert.

## Claims

1. A fuel supply system (1) of an internal combustion engine (2), comprising a first tank (3) constructed as a main tank and a second tank (4) constructed as a buffer reservoir, which are connected to each other via a fuel line (5), wherein
- a first fuel pump (6) and a first fuel filter (7) serving as a pre-filter are arranged between the first and the second tank (3, 4), whereas a second fuel pump (12) and a second fuel filter (11) are arranged between the second tank (4) and the internal combustion engine (2),
- at least the first fuel filter (7) has a water separator (8) for drying the fuel,
**characterized in that**
- a first return line (13) is provided, which is connected to the internal combustion engine (2) on the inlet side and opens into the second tank (4) on the outlet side and into the first fuel filter (7) on the raw side,
- a preheating valve (14) is arranged in the first return line (13), which preheating valve distributes the fuel, flowing back from the internal combustion engine (2), to the first fuel filter (7) and/or to the second tank (4),
- the second tank (4) is connected to the first tank (3) via a second return line (15).

2. The fuel supply system according to claim 1,
**characterized in that**
a sensor arrangement (16) is provided, which detects a thickening of the fuel due to temperature or a closing of the first or second fuel filter (7, 11).

3. The fuel supply system according to claim 2,
**characterized in that**
the sensor arrangement (16) has a pressure sensor and/or a temperature sensor.

4. The fuel supply system according to claim 2 or 3,
**characterized in that**
a control/regulation arrangement (17) is provided, which is connected in a communicating manner to the preheating valve (14) and the sensor arrangement (16), and controls the preheating valve (14) as a function of the parameters transmitted by the sensor arrangement (16).

5. The fuel supply system according to claim 4,
**characterized in that**
in the first tank (3) a filling level detection arrangement (19) is provided, which is connected in a communicating manner to the control/regulation arrangement (17).

6. The fuel supply system according to one of claims 1 to 5,
**characterized in that**
in the first tank (3) a moisture sensor (18) is provided for determining the water content present in the fuel.

7. A motor vehicle with a fuel supply system (1) according to one of claims 1 to 6.

8. A method for operating a fuel supply system (1) according to one of claims 1 to 6, in which a differentiation is made between four different operating modes, namely an operating mode I, which represents the normal operation, an operating mode II in so far as there exists a risk of thickening of the fuel or a clogging of the fuel filter (7, 11), an operating mode III in so far as there exists a risk of the internal combustion engine (2) overheating, and an operating mode IV, in which an active drying of the fuel takes place in the first tank (3).

9. The method according to claim 8,
**characterized in that**
in operating mode I the first fuel pump (6) conveys substantially only as much fuel as is burned by the internal combustion engine (2).

10. The method according to claim 8 or 9,
**characterized in that**
in operating mode II the control/regulation arrangement (17), in the case of a corresponding signal of the sensor arrangement (16), switches the preheating valve (14) so that the fuel flowing back from the internal combustion engine (2) is introduced into the fuel line (5) at least predominantly upstream of the first fuel filter (7) and thereby the fuel is heated.

11. The method according to one of claims 8 to 10,
**characterized in that**
in operating mode III the control/regulation arrangement (17), in the case of a corresponding signal of the sensor arrangement (16), switches the preheating valve (14) so that the fuel flowing back from the internal combustion engine (2) is introduced at least predominantly into the second tank (4), wherein the first fuel pump (6) conveys more fuel from the first tank (3) into the second tank (4) than is burned by the internal combustion engine (2), so that via the second return line (15) the warmer fuel flows back from the second tank (4) into the first tank (3) and is mixed there with the colder fuel.

12. The method according to one of claims 8 to 11,
**characterized in that**
in operating mode IV the first fuel pump (6) conveys fuel from the first tank (3) through the first fuel filter (7) into the second tank (4), so that as a function of the operating state of the internal combustion engine (2) the fuel dried in the first fuel filter (7) is fed exclusively to the internal combustion engine (2) or flows back at least partially via the second return line (15) from the second tank (4) into the first tank (3) and is mixed there with the fuel.

13. The method according to claim 12,
**characterized in that**
- the fuel drying is carried out in operating mode IV until the moisture sensor (18) determines a predefined moisture content,
- the fuel drying is activated in operating mode IV in so far as the filling level detection arrangement (19) detects a filling of the first tank (3) with fuel.

## Revendications

1. Système d'alimentation en carburant (1) d'un moteur à combustion interne (2), avec un premier réservoir (3) réalisé sous forme de réservoir principal et un deuxième réservoir (4) réalisé sous forme de réservoir tampon, qui sont reliés l'un à l'autre par le biais d'une conduite de carburant (5), dans lequel
- une première pompe de carburant (6) et un premier filtre de carburant (7) servant de préfiltre sont agencés entre le premier et le deuxième réservoir (3, 4), tandis qu'une deuxième pompe de carburant (12) et un deuxième filtre de carburant (11) sont agencés entre le deuxième réservoir (4) et le moteur à combustion interne (2),
- au moins le premier filtre de carburant (7) présente un séparateur d'eau (8) pour le séchage du carburant,
**caractérisé en ce**
- **qu'**une première conduite de retour (13) est prévue, qui est reliée côté entrée au moteur à combustion interne (2) et débouche côté sortie dans le deuxième réservoir (4) et côté brut dans le premier filtre de carburant (7),
- **qu'**une soupape de préchauffage (14) est agencée dans la première conduite de retour (13), qui répartit le carburant refluant du moteur à combustion interne (2) sur le premier filtre de carburant (7) et/ou le deuxième réservoir (4),
- **que** le deuxième réservoir (4) est relié au premier réservoir (3) par le biais d'une deuxième conduite de retour (15).

2. Système d'alimentation en carburant selon la revendication 1,
**caractérisé en ce**
**qu'**un dispositif de capteur (16) est prévu, qui détecte un épaississement du carburant lié à la température ou une obstruction du premier ou deuxième filtre de carburant (7, 11).

3. Système d'alimentation en carburant selon la revendication 2,
**caractérisé en ce**
**que** le dispositif de capteur (16) présente un capteur de pression et/ou un capteur de température.

4. Système d'alimentation en carburant selon la revendication 2 ou 3,
**caractérisé en ce**
**qu'**un dispositif de commande/régulation (17) est prévu, qui est relié en communication à la soupape de préchauffage (14) et au dispositif de capteur (16) et commande la soupape de préchauffage (14) en fonction des paramètres transmis par le dispositif de capteur (16).

5. Système d'alimentation en carburant selon la revendication 4,
**caractérisé en ce**
**qu'**un dispositif de détection de niveau de remplissage (19), qui est relié en communication au dispositif de commande/régulation (17), est prévu dans le premier réservoir (3).

6. Système d'alimentation en carburant selon l'une quelconque des revendications 1 à 5,
**caractérisé en ce**
**qu'**un capteur d'humidité (18) est prévu dans le premier réservoir (3) pour la détermination de la part d'eau présente dans le carburant.

7. Véhicule automobile avec un système d'alimentation en carburant (1) selon l'une quelconque des revendications 1 à 6.

8. Procédé de fonctionnement d'un système d'alimentation en carburant (1) selon l'une quelconque des revendications 1 à 6, dans lequel on distingue quatre modes de fonctionnement différents, à savoir un mode de fonctionnement I, qui représente le fonctionnement normal, un mode de fonctionnement Il s'il y a un risque d'épaississement du carburant ou un encrassement du filtre de carburant (7, 11), un mode de fonctionnement III, s'il y a un risque de surchauffe du moteur à combustion interne (2) et un mode de fonctionnement IV, dans lequel il y a un séchage actif du carburant dans le premier réservoir (3).

9. Procédé selon la revendication 8,
**caractérisé en ce**
**que** dans le mode de fonctionnement I, la première pompe de carburant (6) ne transporte sensiblement que la quantité de carburant qui est brûlée par le moteur à combustion interne (2).

10. Procédé selon la revendication 8 ou 9,
**caractérisé en ce**
**que** dans le mode de fonctionnement II, le dispositif de commande/régulation (17) commute la soupape de préchauffage (14) lors d'un signal correspondant du dispositif de capteur (16) de façon à ce que le carburant refluant du moteur à combustion interne (2) soit introduit au moins principalement en amont du premier filtre de carburant (7) dans la conduite de carburant (5) et le carburant soit ainsi chauffé.

11. Procédé selon l'une quelconque des revendications 8 à 10,
**caractérisé en ce**
**que** dans le mode de fonctionnement III, le dispositif de commande/régulation (17) commute la soupape de préchauffage (14) lors d'un signal correspondant du dispositif de capteur (16) de façon à ce que le carburant refluant du moteur à combustion interne (2) soit introduit au moins principalement dans le deuxième réservoir (4), dans lequel la première pompe de carburant (6) transporte plus de carburant du premier réservoir (3) au deuxième réservoir (4) que brûlé par le moteur à combustion interne (2) de façon à ce que le carburant plus chaud reflue du deuxième réservoir (4) au premier réservoir (3) par le biais de la deuxième conduite de retour (15) et soit mélangé là avec le carburant plus froid.

12. Procédé selon l'une quelconque des revendications 8 à 11,
**caractérisé en ce**
**que** dans le mode de fonctionnement IV, la première pompe de carburant (6) transporte du carburant du premier réservoir (3) au deuxième réservoir (4) par le premier filtre de carburant (7) de façon à ce qu'en fonction de l'état de fonctionnement du moteur à combustion interne (2), le carburant séché dans le premier filtre de carburant (7) soit amené exclusivement au moteur à combustion interne (2) ou reflue au moins en partie par le biais de la deuxième conduite de retour (15) du deuxième réservoir (4) au premier réservoir (3) et soit mélangé là avec le carburant.

13. Procédé selon la revendication 12,
**caractérisé en ce**
- **que** le séchage de carburant dans le mode de fonctionnement IV est réalisé jusqu'à ce que le capteur d'humidité (18) détermine une teneur en humidité prédéfinie,
- **que** le séchage de carburant dans le mode de fonctionnement IV est activé, si le dispositif de détection de niveau de remplissage (19) détecte un remplissage du premier réservoir (3) avec le carburant.
